# EUROPEAN PATENT SPECIFICATION

(11) **EP 2 079 598 B1**
(45) Date of publication and mention of the grant of the patent: **14.07.2010**
(21) Application number: 07859052.8
(22) Date of filing: 25.09.2007
(51) Int. Cl.: B60D 1/46

(54) **TRACTOR HITCHES**
ANBAUVORRICHTUNGEN FÜR SCHLEPPER
ATTELAGES DE TRACTEUR

(30) Priority: 03.11.2006 GB 0621924
(43) Date of publication of application: 22.07.2009
(73) Proprietor: AGCO GmbH, 87616 Marktoberdorf (DE)
(72) Inventor: KNOBLOCH, Jurgen, 87674 Ruderatshofen (DE); KAPFER, Johannes, 87616 Marktoberdorf (DE)
(86) International application number: PCT/IB2007/003924
(87) International publication number: WO 2008/053354

(56) References cited:
- EP-A- 1 559 593
- DE-C1- 10 118 862

## Description

This invention relates to tractor hitches and in particular to hitches, hereinafter referred to "as of the type described" which comprise a pair of generally vertically extending support rails situated one on each side of a power take-off (PTO) shaft of a tractor, the rails being designed to support coupling balls, pins or other hitching means a variable heights between the rails.

EP1559593A2 discloses a tractor hitch according to the preamble of claim 1 comprising a rack provided with two vertical support rails and a plate for carrying a coupling element which can be moved between the rails. The plate is held in a substantially vertical manner within the rails.

Such hitches are well known but suffer from restricted access to the PTO shaft which is located between the rails.

It is an object of the present invention to provide an improved form of hitch of the type described which at least mitigates the above problem.

Thus according to the present invention there is provided a tractor hitch of the type described **characterised in that** a portion of each vertically extending rail in the vicinity of the PTO shaft is moveable to improve access to the PTO shaft.

Preferably the moveable portion of each rail is pivotally mounted on the remainder of the rail for pivoting about either a generally vertically extending axis or a generally horizontally extending axis.

The pivoting portion of each rail can be locked in non-pivoted position.

The pivoting portion of each rail can be also be locked in its pivoted position.

In an alternative construction a portion of each rail is completely removeable to increase the spacing between the rails adjacent the PTO shaft when desired.

The present invention will new be described, by way of example only, with reference to the accompanying drawings in which:-
Figure 2 shows the hitch of Figure 1 with the pivotable portions of the rails in their pivoted positions;
Figure 3 shows a typical clearance zone surrounding the PTO shaft between the pivoted rail portions;
Figure 4 shows the hitch of Figures 1 and 2 with a vertically slideable coupling jaw held on the non-pivoted portions of the rails in alignment with the PTO shaft;
Figure 5 shows the hitch of Figure 4 with the vertically slideable coupling jaw moved above the line of action of the PTO shaft and with other couplers mounted on the rails below the line of action of the PTO shaft;
Figure 6 shows a sketch of part of an alternative vertical rail structure in which part of each of the rails is removeable to improve access to the PTO shaft, and
Figures 7 and 8 show perspective views of a further alternative form of rail structure in which a portion of each rail pivots about a generally horizontal axis.

Referring to the drawings, these show part of a tractor rear hitch 10 which has a pair generally vertically extending support rails 11 and 12 which are secured to the rear of a tractor chassis (not shown) on either side of a power take-off (PTO) shaft 13 which also exits from the rear of the tractor chassis/back axle. The vertical rails 11 and 12 are provided with slots 11a and 12a within which a coupling jaw 14 is vertically slideable. The jaw 14 has generally horizontally extending plunges 15 which can engage holes 16 provided in the slots 11a and 12a to locate the jaw at different heights on the rails 11 and 12.

Other coupling devices such as a single coupling ball 17 (with additional coupling balls 18 and 19 if required) can be mounted on the rails 11 and 12 via a plate 20 which has limbs 21 which are mounted via spacers 22 in the bottom end of slots 11a and 12a using bolts 23. Coupling ball 17 is provided with a keeper 17a so that an implement or attachment mounted on the coupling ball cannot disengage the ball when the device is in use. The additional coupling balls 18 and 19 if used can also be provided with keepers 18a and 19a. These additional balls are used, for example, if it is desired to attach hydraulic cylinders or connecting rods between the tractor and a trailer which is being towed by the tractor in order to steer the trailer.

The device described above is well known and many different types of coupler maybe mounted on the rails 11 and 12 by any suitable means.

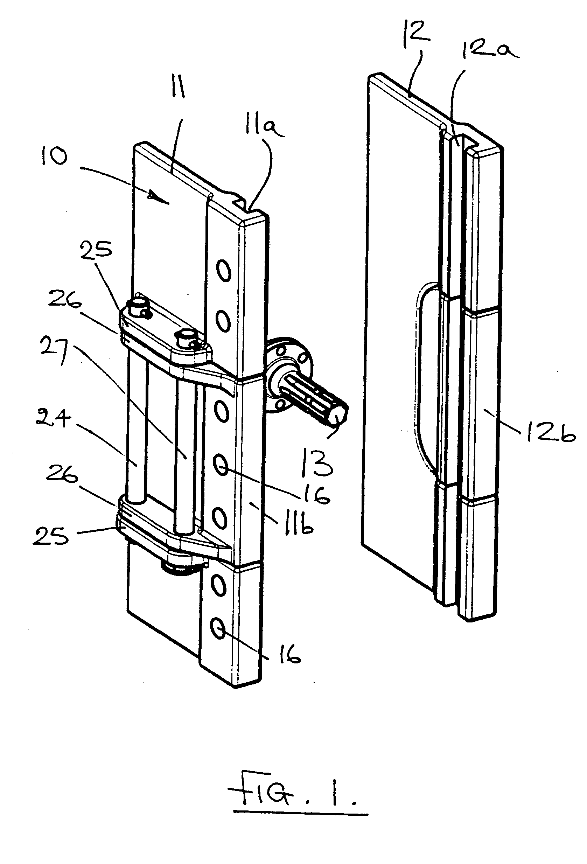

In accordance with the present invention, in order to improve access to the PTO shaft 13 portions 11b and 12b of the support rails 11 and 12 are pivotally mounted on the remainder of the rails by pins 24 which extend through flanges 25 and 26 provided on the rails 11,12 and the pivoting portion 11b, 12b respectively. The pivoting portions 11b and 12b may be locked in the non-pivoted position, shown in Figure 1, by an additional pin 27 which again engages flanges 25 and 26 and passes through additional holes 25a and 26a respectively.

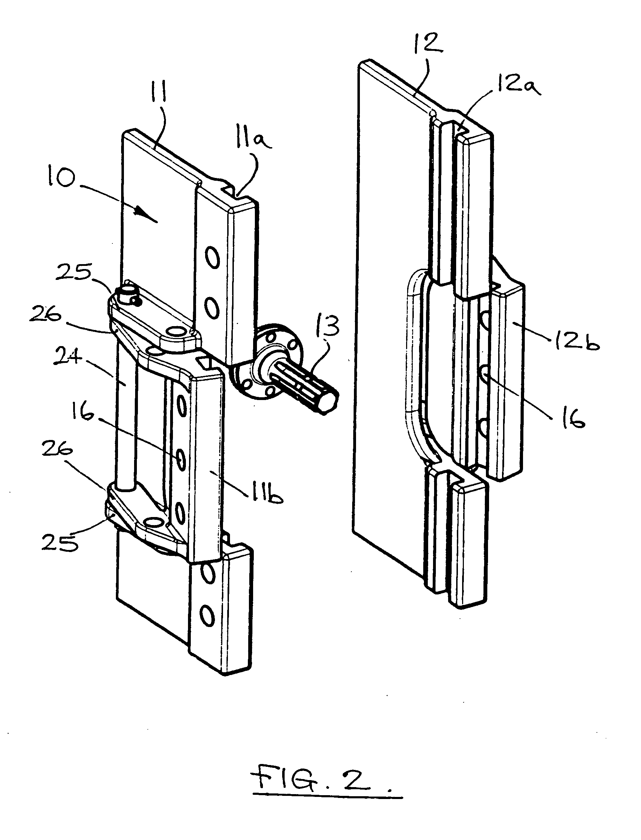

As will be appreciated, in order to pivot the portions 11b and 12b to their pivoted positions shown in Figures 2, 3 and 5, the pins 27 are removed to enable the pivoting portions to pivot on the main mounting pins 24. If desired, the flanges 26 can be provided with a further hole (not shown) to enable the additional pin 27 to be re-inserted and lock the pivoting portions 11b and 12b in their pivoted position.

As will be appreciated, with the portions 11b and 12b in their pivoted position access to the PTO shaft 13 is considerably increased thus facilitating the coupling of PTO shaft driven devices and also accommodating PTO guards which will encircle the shaft when the PTO shaft is in use.

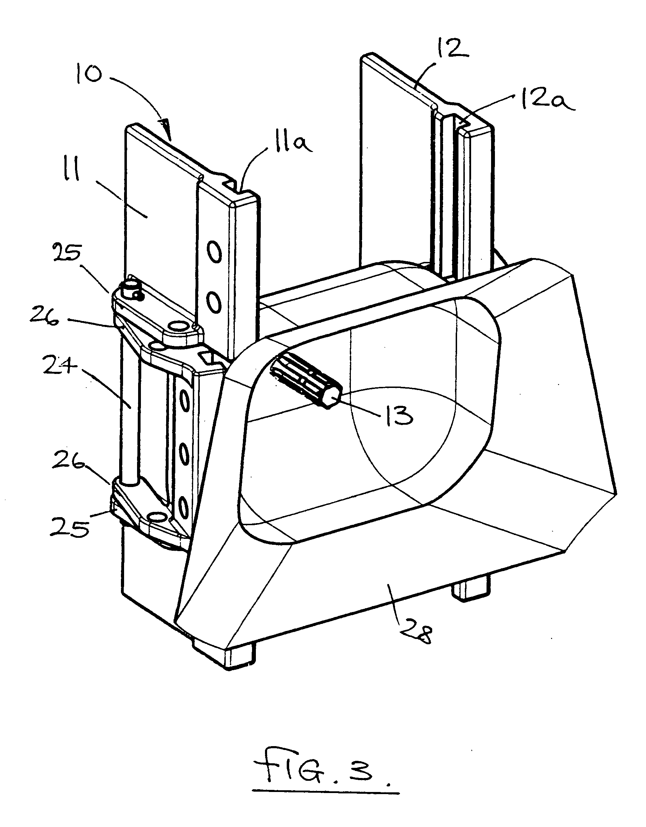

Figure 3 shows a typical clearance zone 28 which it is desired to create around the PTO shaft13. This is created when the rail portions 11b and 12b are in their pivoted position.

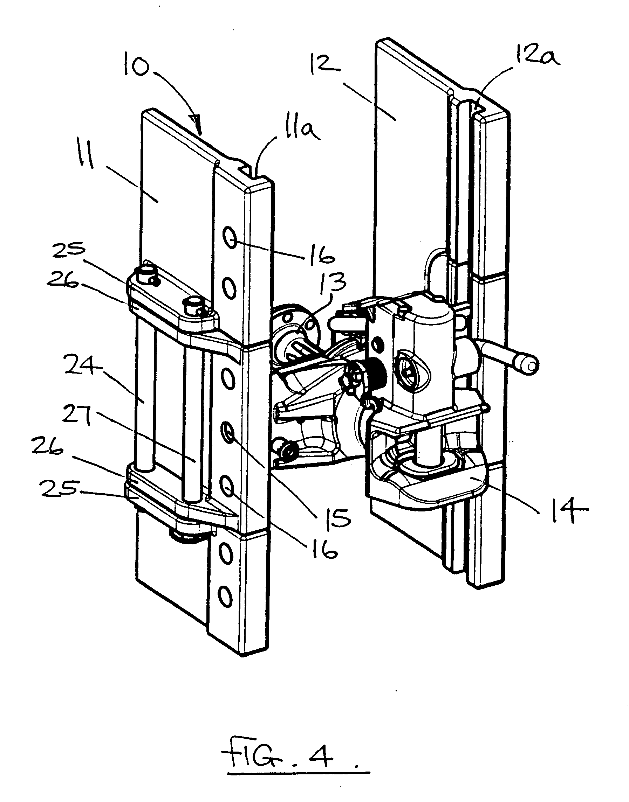

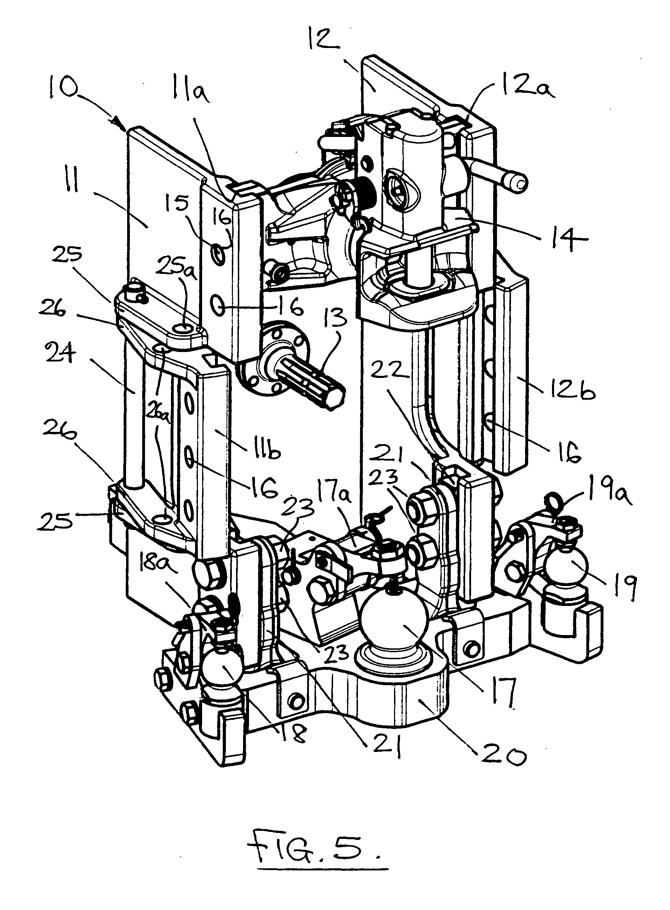

Figure 4 shows the pivoting portions 11b and 12b in their non-pivoted position when the coupling jaw 14, or any other device mounted in the rail slots 11a, 12a can be mounted opposite the PTO shaft. Figure 5 shows the coupling jaw 14 raised into the upper part of the rails 11 and 12 to clear the PTO shaft 13.

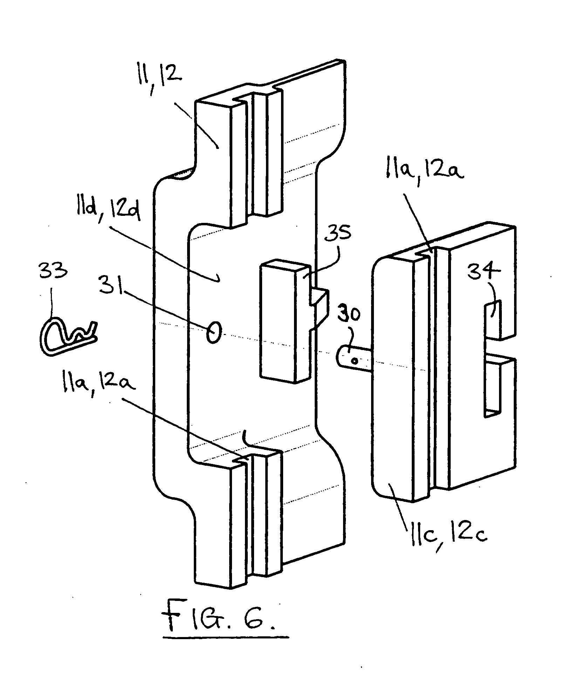

In the second form of the invention, the pivoting portions 11b and 12b are replaced by removeable portions 11c, 12c which can be housed in cut outs 11d, 12d in the side rails 11,12 as shown in Figure 6. Any suitable form of fastening may be employed to hold the removeable portions 11c,12c in their normal operating position in cut outs 11d, 12d. For example, a pin 30 extending through a hole 31and held in position by a clip 33 may be used with a recess 34 in the portion 11c,12c engaging a formation 35 in the cut out 11d, 12d. As will be appreciated, when the portions 11c, 12c are removed greater clearance is provided surrounding the associated PTO shaft.

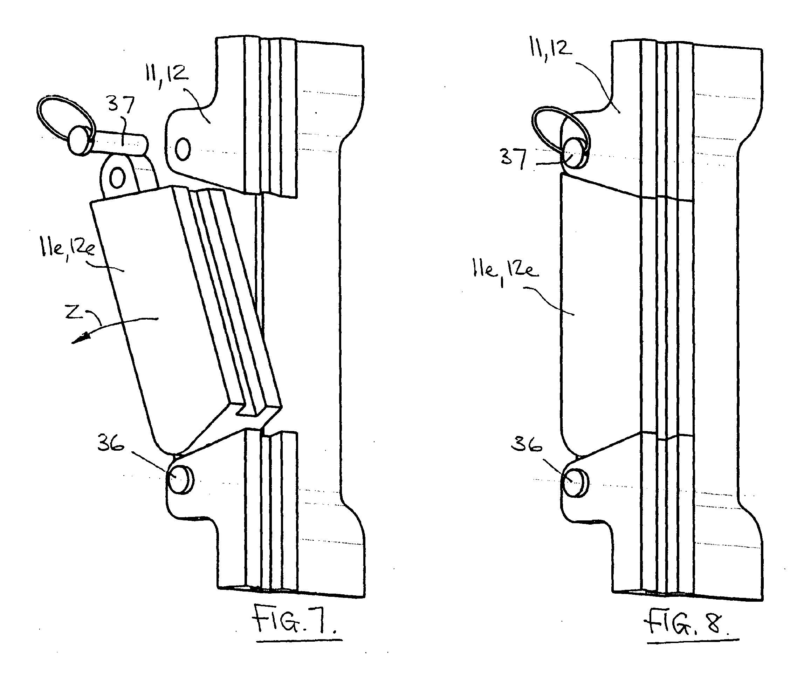

Figures 7 and 8 show a further form of the present invention in which portions 11e, 12e of the rails 11 and 12 are mounted on pins 36 for pivoting about a generally horizontally extending axis and can be pivoted downwardly when a retaining pin 37 is removed as indicated by arrow Z

The present invention thus provides a simple but efficient manner of improving access to the PTO shaft which still allows the support rails 11, 12 of the hitch to function normally over their full height when the PTO shaft is not in use. Also, when the rail portions 11b,12b or 11e, 12e are pivoted, or the rail portions 11c are removed, it is easier for the operator to mount or demount devices such as the coupling jaw 14 in the slots 11a, 12a of the rails since such devices no longer require to be lifted to the top of the rails to enter or exit the slots 11a, 12a.

## Claims

1. A tractor rear hitch (10) comprising a pair of generally vertically extending support rails (11,12) situated one on each side of a power take-off (PTO) shaft of a tractor, the rails being designed to support coupling balls, pins or other hitching means (17,18,19) at variable heights between the rails (11,12), the hitch being **characterised in that** a portion (11b,12b) of each vertically extending rail in the vicinity of the PTO shaft is moveable relative to the remainder of each rail to improve access to the PTO shaft (13).

2. A hitch (10) according to claim 1 in which the moveable portion (11b,12b) of each rail (11,12) is pivotally mounted on the remainder of the rail for pivoting about a generally vertically extending axis or a generally horizontally extending axis.

3. A hitch (10) according to claim 2 in which the pivoting portion (11b,12b,11e.,12e) of each rail can be locked in non-pivoted position.

4. A hitch according to claim 2 or 3 in which the pivoting portion of each rail can be also be locked in its pivoted position.

5. A hitch according to claim I in which a portion (11c,12c) of each rail is completely removeable to increase the spacing between the rails adjacent the PTO shaft when desired.

## Patentansprüche

1. Rückseitige Anbauvorrichtung (10) für ein Zugfahrzeug, insbesondere einen Traktor, mit einem Paar von sich grundsätzlich vertikal erstreckenden abstützenden Schienen oder Elementen (im Folgenden Schienen 11, 12), die jeweils auf einer Seite von einer Leistung abgebenden Welle (power take-off, PTO-Welle) des Zugfahrzeugs angeordnet sind, wobei die Schienen geeignet gestaltet sind, um Koppelkugeln, Pins oder andere Anbaumittel (17, 18, 19) bei unterschiedlichen Höhen zwischen den Schienen (11, 12) abzustützen, **dadurch gekennzeichnet, dass** ein Bereich (11b, 12b) von jeder sich vertikal erstreckenden Schiene in der Nähe der PTO-Welle relativ zu dem verbleibenden Teil von jeder Schiene bewegbar ist zur Verbesserung eines Zugangs zu der PTO-Welle (13).

2. Anbauvorrichtung (10) nach Anspruch 1, **dadurch gekennzeichnet, dass** der bewegbare Bereich (11b, 12b) von jeder Schiene (11, 12) verschwenkbar an dem verbleibenden Teil der Schiene montiert ist zur Verschwenkung um eine sich grundsätzlich vertikal erstreckende Achse oder eine sich grundsätzlich horizontal erstreckende Achse.

3. Anbauvorrichtung (10) nach Anspruch 2, **dadurch gekennzeichnet, dass** der schwenkende Bereich (11b, 12b, 11e, 12e) von jeder Schiene in der nicht verschwenkten Position festgelegt, verrastet oder verriegelt werden kann.

4. Anbauvorrichtung nach Anspruch 2 oder 3, **dadurch gekennzeichnet, dass** der verschwenkende Bereich von jeder Schiene auch in der verschwenkten Position festgesetzt, verrastet oder verriegelt werden kann.

5. Anbauvorrichtung nach Anspruch 1, **dadurch gekennzeichnet, dass** ein Bereich (11c, 12c) von jeder Schiene vollständig entfernbar oder demontierbar ist zur Vergrößerung des Abstands zwischen den Schienen benachbart der PTO-Welle, wenn dies gewünscht ist.

## Revendications

1. Attelage arrière de tracteur (10) comprenant une paire de rails de support s'étendant sensiblement verticalement (11, 12) situés de chaque côté d'un arbre de prise de puissance (PTO) d'un tracteur, le rail étant conçu afin de supporter des boules, broches de couplage ou autres moyens d'attelage (17, 18, 19) à des hauteurs variables entre les rails (11, 12), l'attelage étant **caractérisé en ce qu'**une partie (11b, 12b) de chaque rail s'étendant verticalement à proximité de l'arbre de prise PTO peut être déplacée par rapport au reste de chaque rail de manière à améliorer l'accès à l'arbre de prise PTO (13).

2. Attelage (10) selon la revendication 1, dans lequel la partie mobile (11b, 12b) de chaque rail (11, 12) est montée de manière à pouvoir pivoter sur le reste du rail afin de pivoter autour d'un axe s'étendant sensiblement verticalement ou d'un axe s'étendant sensiblement horizontalement.

3. Attelage (10) selon la revendication 2, dans lequel la partie pouvant pivoter (11b, 12b, 11e, 12e) de chaque rail peut être verrouillée dans une position sans pivotement.

4. Attelage selon la revendication 2 ou 3, dans lequel la partie pouvant pivoter de chaque rail peut aussi être verrouillée dans sa position après pivotement.

5. Attelage selon la revendication 1, dans lequel une partie (11c, 12c) de chaque rail peut être entièrement retirée afin d'augmenter l'espacement entre les rails adjacents à l'arbre de prise PTO lorsque cela est désiré.
